# EUROPEAN PATENT APPLICATION

(11) **EP 4 512 614 A1**
(43) Date of publication of application: **26.02.2025**
(21) Application number: 23193098.3
(22) Date of filing: 24.08.2023
(51) Int. Cl.: B32B 17/10

(54) **COLORED INTERLAYERS FOR LAMINATED GLASS WITH IMPROVED OPTICAL PROPERTIES**

(71) Applicant: Kuraray Europe GmbH, 65795 Hattersheim (DE)
(72) Inventor: Wolpers, Arne, Köln (DE); Matl, Richard, Holesov (CZ)
(74) Representative: Janßen, Christian Oliver

(57) **Abstract**

The invention concerns an interlayer film for laminated glass comprising four or more layers comprising a colored layer with improved optical properties especially for vehicle windows.

## Description

The invention concerns an interlayer film for laminated glass comprising four or more layers comprising a colored layer with improved optical properties especially for vehicle side windows.

Glass laminates comprising two sheets of glass bonded to each other with an interlayer film containing a thermoplastic resin are widely known, for example for windows in vehicles.

In order to improve the comfort for the passengers inside the vehicles, so-called acoustic glazing is used. It generally comprises a three-layer sound insulation interlayer film which includes a softer sound insulation layer and two protective layers on either side of the sound insulation layer. The sound insulation layer normally contains polyvinyl acetal resin that is highly compatible with the plasticizers used, making it softer and thus, providing good sound insulation properties. The protective layers prevent bleed-out of the large amount of plasticizer in the sound insulation layer and provide stability and ease of use.

It is also known to use tinted windows for the rear side windows, sunroof and rear windows in passenger vehicles in order to provide privacy as well as protection against sunlight for the passengers in the rear seat.

Such tinted windows which provide sound-dampening properties at the same time are especially used for high end cars. However, it has been previously reported that stacking a colored layer together with a sound-dampening trilayer film can lead to undesired optical properties in the final glass laminates as a pattern of brighter and darker streaks can be visible. However, such poor appearance is not acceptable in the high end vehicle market.

The appearance of these pattern, also called mottle, is usually explained by the fact that the surfaces of interlayer films for laminated glass are generally embossed to form recesses to allow good de-airing properties during the lamination process.

In common production of a laminated glass, a laminate including at least one interlayer film for a laminated glass interposed between two glass plates are passed through nip rolls for deaeration or put in a rubber bag under vacuum to be pressure-bonded while the air remaining between the glass plates and the interlayer film is removed.

The recesses on the surface of the interlayer film are then removed in the lamination step when the surface of the interlayer is pressed between against the glass sheets with high temperature and pressure. However, when the surface of the interlayer is pressed against another interlayer, the recesses can create a pattern in the colored layer and/or the rather soft sound-dampening layer and such pattern is not completely removed during the lamination step, leading to the mottle effect. Several approaches have been taken to mitigate mottle, including increasing the distance between the recesses and the colored layer. However, the present inventors have found that a specific design of the roughness pattern of the colored layer itself plays a decisive role in preventing the mottle effect.

Generally, tinted interlayers with acoustic properties are prepared by adding a colorant to the bulk of the acoustic trilayer itself. However, such products are difficult to recycle as the tinted trilayers can only be fed into other tinted laminate applications, which are rather limited.

On the other hand, recycling of interlayers for laminated glass becomes increasingly important in the glass industry in order to provide sustainable products. One advantage of the present invention is that the color is provided in an additional colored layer which can be separated from the bulk acoustic part of the interlayer, e.g. by slicing the colored layer from the bulk interlayer according to the process disclosed in EP 3808558 A1. Thus, only a portion of the interlayer needs to be recycled into tinted applications and the bulk of the interlayer can be recycled into all standard colorless applications.

Now therefore, the present invention concerns an interlayer film for laminated glass comprising four or more layers each containing a polyvinyl acetal and a plasticizer, said four or more layers being stacked on each other in the following order:
- a colored layer comprising a polyvinyl acetal, a plasticizer and at last one colorant,
- a first protective layer comprising a polyvinyl acetal and a plasticizer,
- a sound-dampening layer comprising a polyvinyl acetal and a plasticizer, and
- a second protective layer comprising a polyvinyl acetal and a plasticizer,
wherein the colored layer has a roughness on at least on one of its surfaces with a ten-point average roughness Rz measured according to DIN EN ISO 4287 of 5 and 30 um and a mean width Rsm measured according to DIN EN ISO 4287 of between 10 and 1000 um.

The feature "in the following order" is intended to denote that the four layers essential for the invention are present in the order as required by the claim. However, additional layers might be present on top, below or in between these four layers.

Preferably, the colored layer has a roughness on both of its surfaces with a ten-point average roughness Rz measured according to DIN EN ISO 4287 of 5 and 30 um and a mean width Rsm measured according to DIN EN ISO 4287 of between 10 and 1000 um.

Also preferably, the Rz is from 10 to 20 µm, more preferably from 12.5 to 17.5 um.

Also preferably, the Rsm is from 700 to 900 um or from 500 to 800 µm, more preferably, it is from 850 to 950 um.

In another embodiment, the first protective layer can also have an embossed pattern wherein the values for Rz and/or Rsm are in the same range as the values given for the colored layer.

When polyvinyl acetal films are recycled, e.g. from trimmings obtained during the production of glass laminates, the recycled polyvinyl acetal material may have a problem with higher haze values or yellowness due to the repeated extrusion step which is performed under high temperature and pressure potentially leading to partial degradation of the polyvinyl acetal. However, when using such recycled material for tinted glass laminates, this problem with increased haze and yellowness is mitigated as the color of the colored layers mask this slight optical defect.

Accordingly, in another embodiment of the present invention the polyvinyl acetal in the colored layer comprises at least 75 % by weight recycled polyvinyl acetal, preferably at least 90 % by weight and most preferably at least 95 % by weight. Most preferably, all polyvinyl acetal in the colored layer is from recycled material.

Also preferably, the polyvinyl acetal in each of the four or more layers comprises at least 75 % by weight recycled polyvinyl acetal, more preferably at least 90 % by weight and most preferably at least 95 % by weight. Specifically, all polyvinyl acetal in the in each of the four or more layers is from recycled material.

Preferably, the colored layer covers the complete surface area of the interlayer film. In other words, the complete interlayer appears colored, preferably in a predefined shade of grey.

The individual films used according to the invention can each be used in almost any thickness provided that the sound insulation characteristics are not adversely altered and the colored layer provides a sufficiently colored appearance. All individual films can for example have the same thickness; however, combinations of individual films of varying thickness are also possible.

Preferably, the thickness of the colored layer is from 150 to 500 µm, more preferably from 250 to 350 um

Also preferably, the total thickness of the first and second protective layer and the acoustic layer together is from 450 to 750 µm, more preferably 550 to 650 um.

The individual films according to the invention comprise plasticizer-containing polyvinyl acetals obtained by acetalizing a fully or partially saponified polyvinyl alcohol with an aldehyde. The sound-dampening layer preferably comprises a polyvinyl acetal with a portion of polyvinyl alcohol groups of 17-22% by weight, preferably 18-21% by weight and more preferably 19.5-20.5% by weight. Preferably, the protective layers and the colored layer each comprise a polyvinyl acetal with a portion of polyvinyl alcohol groups of less than 14% by weight, preferably 11-13.5% by weight and more preferably less than 11.5-13% by weight.

The polyvinyl alcohol content and polyvinyl acetate content of polyvinyl acetal are determined in accordance with ASTM D 1396-92.

The compatibility of plasticizer and partially acetalized polyvinyl alcohol generally diminishes with decreasing polar character of the plasticizer. Plasticizers of higher polarity are therefore more compatible with polyvinyl acetal than those having lower polarity. Alternatively, the compatibility of plasticizers of lower polarity increases with increasing degree of acetalization, i.e. with decreasing number of hydroxy groups and hence decreasing polarity of the polyvinyl acetal.

The individual films can contain the same or different plasticizers. The use of the same plasticizers is preferred; the composition of plasticizer blends in the individual films possibly changing somewhat as a result of migration.

The individual films can comprise plasticizers or plasticizer blends of at least one of the following plasticizers known for PVB film:
esters of multivalent aliphatic or aromatic acids, for example dialkyl adipates such as dihexyl adipate, dioctyl adipate, hexyl cyclohexyl adipate, mixtures of heptyl and nonyl adipates, diisononyl adipate, heptyl nonyl adipate and esters of adipic acid with cycloaliphatic or ether linkages-containing ester alcohols, dialkyl sebacates such as dibutyl sebacate and esters of sebacic acid with cycloaliphatic or ether linkages-containing ester alcohols, esters of phthalic acid such as butyl benzyl phthalate or bis-2-butoxyethyl phthalate, esters of cyclohexanedicarboxylic acid such as 1,2-cyclohexanedicarboxylic acid diisononyl ester
esters or ethers of multivalent aliphatic or aromatic alcohols or oligoether glycoles with one or more unbranched or branched aliphatic or aromatic substituents, such as for example esters of di-, tri- or tetraglycoles with linear or branched aliphatic or cycloaliphatic carboxylic acids; diethylene glycol bis(2-ethyl hexanoate), triethylene glycol bis(2-ethyl hexanoate), triethylene glycol bis(2-ethyl butanoate), tetraethylene glycol bis-n-heptanoate, triethylene glycol bis-n-heptanoate, triethylene glycol bis-n-hexanoate, tetraethylene glycol dimethyl ether and/or dipropylene glycol benzoate can serve as examples for the latter group phosphates with aliphatic or aromatic ester alcohols such as for example tris(2-ethylhexyl)phosphate (TOF), triethyl phosphate, diphenyl-2-ethylhexyl phosphate, and/or tricresyl phosphate esters of citric acid, succinic acid and/or fumaric acid.

Particularly preferably, one or more of the following plasticizers is used:
di(2-ethylhexyl)sebacate (DOS), di(2-ethylhexyl)adipate (DOA), dihexyl adipate (DHA), dibutyl sebacate (DBS), triethylene glycol bis-n-heptanoate (3G7), tetraethylene glycol bis-n-heptanoate (4G7), triethylene glycol bis(2-ethyl hexanoate) (3GO or 3G8), tetraethylene glycol bis(n-2-ethyl hexanoate) (4GO or 4G8), di(2-butoxyethyl)adipate (DBEA), di(2-butoxyethoxyethyl)adipate (DBEEA) di(2-butoxyethyl)sebacate (DBES), di(2-ethylhexyl)phthalate (DOP), di-isononyl phthalate (DINP), triethylene glycol bis-isononanoate, triethylene glycol bis(2-propyl hexanoate), 1,2-cyclohexanedicarboxylic acid diisononyl ester (DINCH), tris(2-ethylhexyl)phosphate (TOF) and dipropylene glycol benzoate.
In addition, the individual films according to the invention can comprise further additives known to those skilled in the art such as residual amounts of water, UV absorber, antioxidants, adhesion regulators, optical brighteners, stabilizers, colorants, processing aids, organic or inorganic nanoparticles, fumed silica and/or surface active substances.

The films based on plasticizer-containing polyvinyl acetal preferably contain polyvinyl butyral (PVB) obtained by acetalizing polyvinyl alcohol with butyraldehyde.

The polyvinyl acetal in the sound-dampening layer preferably comprises polyvinyl acetate groups between 5 and 8 mol %, whereas the protective layers and the colored layer comprise polyvinyl acetal with a portion of polyvinyl acetate groups of 0.1 to 11 mol %, preferably 0.1-4 mol %, more preferably 0.1-2 mol %, is particularly preferred.

Preferably, the colorant is at least one dye and/or pigment. They can be any suitable coloring material, either inorganic or organic, which should not dissolve in the polymer matrix and thus resist migration from the colored layer to the other layers.

As pigments, preferable carbon black, iron oxides, titanium oxide or spinel pigments are used. The pigments may be dispersed before extrusion in a masterbatch in the same polyvinyl acetal and/or in the same plasticizer as used for the production of the colored layer. Preferably, the colorant is added to the colored layer during extrusion in an amount to provide a pre-defined shade of grey in the final laminate.

In another aspect, the present invention concerns a laminate comprising the interlayer according to the invention interposed between two sheets of glass, e.g. two sheets of glass in a thickness from 1.0 to 2.5 mm, preferably from 1.5 to 2.0 mm each.

In yet another aspect, the present invention concerns the use of such laminates as a side window, sunroof and/or rear window for a vehicle, especially a rear side window.

Preferably, the colored film is produced by extrusion separately from the other layers, whereas the sound-dampening layer is co-extruded with the two protective layers. The layers are then stacked and laminated between the two glass sheets.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazings can be laminated within 30 - 60 minutes. Reduced pressures from 0.01 to 300 mbar and temperatures from 100 to 200 °C, in particular 130 - 160 °C, have proven their worth in practice.

Accordingly, the present invention also relates to a process to produce the interlayer according to the invention comprising the steps of:
- providing at least part of the polyvinyl acetal for the colored layer by shredding pre-extruded polyvinyl acetal films,
- extruding the shredded polyvinyl acetal from the previous step together with a colorant to form the colored layer,
- providing a stack of layers comprising the colored layer, a first protective layer, a sound-dampening layer and a second protective, in that order, and
- laminating the interlayer thus formed between two sheets of glass.

### Examples

### Methods

### Measurements of L*a*b and TL

Color space values L*a*b of the interlayer were measured with a HunterLab ColorQuest XE Spectrophotometer (commercially available from Hunter Associates Laboratory, Inc.) according to ASTM E 313 (Illuminant C, observer angle 2°).

### Measurement of Rz and Rsm

The surface properties Rz and Rsm of the films were measured according to DIN EN ISO 4287.

### Photos of laminates

In a dark room, the laminates of 30 cm x 30 cm were positioned horizontally on a light table with a lighting area of 65 cm x 45 cm. A non-transparent, black template was positioned around the laminate to avoid light entering the lens of the photo camera which did not pass through the laminate before. The LED lamp type was 2-CB-D65 using D65 norm light with a color temperature of 6500 K and a brightness of 5000 lx.

The photo camera was fixed in a rack above the laminate with a distance of the lens to the laminate of 50 cm. For the photos, an aperture of f/5.6 and exposure time between 1/160 sec and 1/40 sec was used as indicated below.

The photos have a size of 6000 px x 4000 px, corresponding to an area around the laminate of about 69 cm x 46 cm. To better show the observed optical impressions, a section of about 434 px x 434 px, corresponding to 5 cm x 5 cm, was cropped from the photo at the top center position of the laminate. This section was edited with a standard image editing program (Microsoft Powerpoint) to increase the brightness and the contrast as indicated below.

### Preparation of films

### Preparation of Clear monolayer

Commercially available Trosifol^{®} Clear 0.76 mm was used.

### Preparation of Clear trilayer

Commercially available Trosifol^{®} SC Multilayer 0.50 mm was used.

### Preparation of Colored monolayer

Colored monolayer was produced by film extrusion using a single screw extruder. As raw material, recycled PVB trimmings were extruder together with a colored PVB masterbatch. Both materials were milled to flakes of approximately 5 mm in a water-cooled mill, then transferred into a water cooled mixing tank, and from the tank transferred into the funnel of the extruder. The films were extruded through a flat slit die and cooled down in a water bath. The film thickness was adjusted by the speed of the rollers with a target of 380 um. The film surface roughness was controlled by the size of the die slit and the die lips temperature.

### Preparation of laminates

### Procedure 1

Regular test laminates in the dimensions of 30 cm x 30 cm were produced with conventional clear glass (Planiclear^{®} 2.1 mm) cleaned with deionized water < 5 µS on a flat glass washing machine with the film A and B in the following lay-up order: bottom glass - film A - film B - top glass. Film A is used either as the original, i.e., with the original surface roughness, or after modification of the surface roughness as described in Procedure 2.

The sandwiches were pre-laminated in a vacuum bag conventional to the industry with subsequent steps of (1) 20 min at room temperature and 0.1 bar and (2) 20 min at 90 °C and 0.1 bar. From the pre-laminates, the final laminates were produced conventional to the industry in an autoclave at a maximum of 140 °C and a maximum of 12 bar.

### Procedure 2

To modify the surface roughness including parameters Rz and Rsm of a film A, laminates in the dimensions of 30 cm x 30 cm were produced with conventional clear glass (Planiclear^{®} 2.1 mm) cleaned with deionized water < 5 µS on a flat glass washing machine with commercial PET (polyethylene terephthalate) film with a thickness of about 0.18 mm and low adhesion to both PVB and glass in the following lay-up order: bottom glass - PET - film A - PET - top glass.

The sandwiches were pre-laminated in a vacuum bag conventional to the industry with subsequent steps of (1) 20 min at room temperature and 0.1 bar and (2) 20 min at 90 °C and 0.1 bar. From the pre-laminates, the final laminates were produced conventional to the industry in an autoclave at a maximum of 140 °C and a maximum of 12 bar.

Film A with modified surface roughness was obtained by removing both glass layers and both PET layers from the sandwich after the final lamination. Film A with modified surface roughness was then used to produce regular test laminates as described in Procedure 1.

The used films with roughness parameters Rz and Rsm and color space parameters are shown in Table 1. Film #2 was produced from Film #1 according to Preparation of laminates Procedure 2. Rsm values for Film #2 are not shown as they are not meaningful for the used measurement method for Rz values this low. Films #1, #3, and #4 were produced as described in Preparation of films.

### Interpretation of the photos

### Example 1

To illustrate the impact of Rz and Rsm of the colored film on the visibility of mottle, laminates were produced according to Preparation of laminates Procedure 1. The used films with roughness parameters Rz and Rsm and color space parameters are shown in Table 1. Films #1, #2, #3, #4, and #5 were produced as described in Preparation of films.

**Table 1. Films used for colamination with subsequent optical evaluation through photo images.**

| **Film:** | **Film #1** | **Film #2** | **Film #3** | **Film #4** | **Film #5** |
|---|---|---|---|---|---|
| **Rz to glass** / **µm** | 18 | 39 | 41 | 16 | 27 |
| **Rz to other film** / **µm** | 25 | 34 | 36 | 15 | 25 |
| **Rsm to glass / µm** | 1000 | 600 | 700 | 900 | 300 |
| **Rsm to other film** / **µm** | 1100 | 600 | 700 | 700 | 240 |
| **Appearance after colamination with Trosifol^{®} SC Multilayer 0.50 mm** | Figure 1a) Strong repetitiv e mottle | Figure 1b) Strong random mottle | Figure 1c) Strong random mottle | Figure 1d) Weak mottle | - |
| **type** | Grey, Colored monolayer | Grey, Colored mono- layer | Grey, Colored mono- layer | Grey, Colored monolayer | Trosifol^{®} SC Multi-layer 0.50 mm |

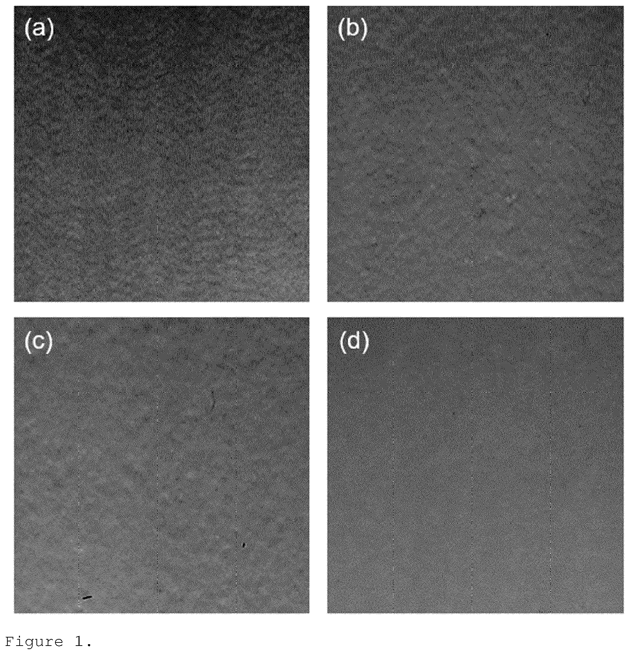

Figure 1 shows photo images of laminates produced according to Preparation of laminates Procedure 1 with Film A = Film #1 and Film B = Film #5 (Figure 1a), with Film A = Film #2 and Film B = Film #5 (Figure 1b), with Film A = Film #3 and Film B = Film #5 (Figure 1c) and with Film A = Film #4 and Film B = Film #5 (Figure 1d). Photos were taken with an exposure time of 1/80 sec. The images show a section of 5 cm x 5 cm with a modified brightness of +10% and a modified contrast of +80% as described in Photos of laminates. Figure 1a (Film #1 with high Rz and high Rsm) shows a distinct wavy pattern of brighter and darker repetitive streaks.

Figures 1b and 1c (Films #2 and #3 with high Rz and low Rsm) show a rough pattern of brighter and darker spots, however, as opposed to Figure 1a, no repetitive pattern can be observed, which is caused by the lower Rsm. Figure 1d (Film #4 with low Rz and low Rsm) shows a smooth pattern with neither distinct brighter and darker spots nor a repetitive pattern, which is caused by lower Rz and lower Rsm, respectively.

### Example 2

To further illustrate the impact of Rz of the colored film on the visibility of mottle, laminates were produced according to Preparation of laminates Procedure 1. The used films with roughness parameters Rz and Rsm and color space parameters are shown in Table 2. Film #7 was produced from Film #6 according to Preparation of laminates Procedure 2. Rsm values for Film #2 are not shown as they are not meaningful for the used measurement method when Rz values are this low. Films #6, #8, and #9 were produced as described in Preparation of films.

**Table 2. Films used for colamination with subsequent optical evaluation through photo images.**

| **Film:** | **Film #6** | **Film #7** | **Film #8** | **Film #9** |
|---|---|---|---|---|
| **Rz to glass / µm** | 15 | 0.8 | 41 | 36 |
| **Rz to other film / µm** | 24 | 0.9 | 38 | 38 |
| **Rsm to glass / µm** | 1000 | - | 700 | 400 |
| **Rsm to other film / µm** | 900 | - | 600 | 300 |
| **Appearance after colamination with Trosifol^{®} Clear 0.76 mm** | Figure 2 left) strong repetitive mottle | Figure 2 right) weak mottle | - | - |
| **Appearance after colamination with Trosifol^{®} SC Multilayer 0.50 mm** | Figure 3 left) strong repetitive mottle | Figure 3 right) weak mottle | - | - |
| **type** | Grey, Colored monolayer | Grey, Colored monolayer | Trosifol^{®} Clear 0.76 mm | Trosifol^{®} SC Multilayer 0.50 mm |

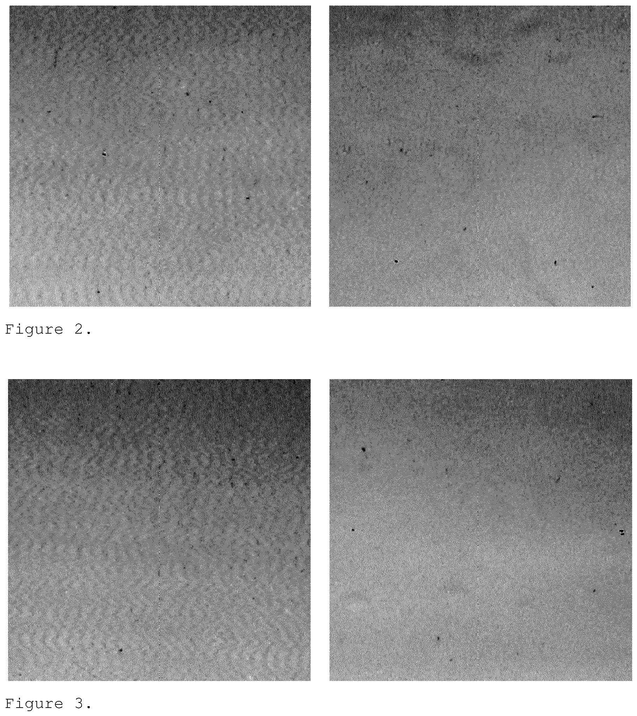

Figure 2 shows photo images of laminates produced according to Preparation of laminates Procedure 1 with Film A = Film #6 and Film B = Film #8 (left image) and with Film A = Film #7 and Film B = Film #8 (right image). Photos were taken with an exposure time of 1/80 sec. The images show a section of 5 cm x 5 cm with a modified brightness of +10% and a modified contrast of +90% for the left image and a modified brightness of +14% and a modified contrast of +90% for the right image as described in Photos of laminates.

Figure 3 shows photo images of laminates produced according to Preparation of laminates Procedure 1 with Film A = Film #6 and Film B = Film #9 (left image) and with Film A = Film #7 and Film B = Film #9 (right image). The images show a section of 5 cm x 5 cm with a modified brightness of +14% and a modified contrast of +90% for both images as described in Photos of laminates.

Both Figure 2 and Figure 3 show a distinct wavy pattern of brighter and darker repetitive streaks for the laminates for which Film #6 was used (left images, higher Rz) and the absence of this pattern for the laminates for which Film #7 was used (right images, lower Rz).

## Claims

1. An interlayer film for laminated glass comprising four or more layers each containing a polyvinyl acetal and a plasticizer, said four or more layers being stacked on each other in the following order:
- a colored layer comprising a polyvinyl acetal, a plasticizer and at last one colorant,
- a first protective layer comprising a polyvinyl acetal and a plasticizer,
- a sound-dampening layer comprising a polyvinyl acetal and a plasticizer, and
- a second protective layer comprising a polyvinyl acetal and a plasticizer,
wherein the colored layer has a roughness on at least one of its surfaces with a ten-point average roughness Rz measured according to DIN EN ISO 4287 of 5 and 30 um and a mean width Rsm measured according to DIN EN ISO 4287 of between 10 and 1000 µm.

2. The interlayer film according to claim 1 wherein the colored layer has a roughness on both of its surfaces with a ten-point average roughness Rz measured according to DIN EN ISO 4287 of 5 and 30 µm and a mean width Rsm measured according to DIN EN ISO 4287 of between 10 and 1000 µm.

3. The interlayer film according to claim 1 or 2 wherein Rz is from 10 to 20 µm.

4. The interlayer film according to any one of the claims above wherein the Rsm is from 700 to 900 µm.

5. The interlayer film according to any one of the claims above wherein the polyvinyl acetal in the colored layer comprises at least 75 % by weight recycled polyvinyl acetal.

6. The interlayer film according to any one of the claims above wherein the polyvinyl acetal in each of the four or more layers comprises at least 75 % by weight recycled polyvinyl acetal.

7. The interlayer film according to any one of the claims above wherein the colored layer covered the complete surface area of the interlayer film.

8. The interlayer film according to any one of the claims above wherein the thickness of the colored layer is from 150 to 500 µm.

9. The interlayer film according to any one of the claims above wherein the total thickness of the first and second protective layer and the acoustic layer together is from 450 to 750 µm.

10. The interlayer film according to any one of the claims above wherein the colorant is at least one dye and/or pigment.

11. The interlayer film according to any one of the claims above wherein the colorant is added to the colored layer during extrusion in an amount to provide a pre-defined shade of grey in the final laminate.

12. The interlayer film according to any one of the claims above wherein the polyvinyl acetal is polyvinyl butyral.

13. A laminate comprising the interlayer according to any one of the claims 1 to 12 interposed between two sheets of glass.

14. Use of the laminate according to claim 11 as a side window, sunroof and/or rear window for a vehicle.

15. A process to produce the interlayer according to claim 12 comprising the steps of:
- providing at least part of the polyvinyl acetal for the colored layer by shredding pre-extruded polyvinyl acetal films,
- extruding the shredded polyvinyl acetal from the previous step together with a polyvinyl acetal masterbatch comprising a colorant to form the colored layer,
- providing a stack of layers comprising the colored layer, a first protective layer, a sound-dampening layer and a second protective, in that order, and
- laminating the interlayer thus formed between two sheets of glass.
